# EUROPÄISCHE PATENTSCHRIFT

(11) **EP 2 608 999 B1**
(45) Veröffentlichungstag und Bekanntmachung des Hinweises auf die Patenterteilung: **25.02.2015**
(21) Anmeldenummer: 11746190.5
(22) Anmeldetag: 14.07.2011
(51) Int. Cl.: B62J 6/00, B62M 6/50, B62M 6/00, B62J 99/00

(54) **STEUERGERÄT ZUR STEUERUNG EINES ELEKTRISCHEN ANTRIEBS EINES ELEKTROFAHRRADS UND VERFAHREN ZUR VERSORGUNG ELEKTRISCHER LASTEN EINES ELEKTROFAHRRADS**
CONTROL UNIT FOR CONTROLLING THE ELECTRICAL ACTUATOR OF AN ELECTRIC POWERED BICYCLE AND METHOD OF MANAGEMENT OF ELECTRIC LOADS OF SAID BICYCLE
CALCULATEUR DE COMMANDE DE LA PROPULSION D'UNE BICYCLETTE ELECTRIQUE ET METHODE DE GESTION DES CHARGES ELECTRIQUES DE CELLE-CI

(30) Priorität: 27.08.2010 DE 102010039850
(43) Veröffentlichungstag der Anmeldung: 03.07.2013
(73) Patentinhaber: Robert Bosch GmbH, 70442 Stuttgart (DE)
(72) Erfinder: WINDMUELLER, Andreas, 71679 Asperg (DE); DASBACH, Gregor, 14120 Mondeville (FR); NONNENMACHER, Pierre, 67270 Minversheim (FR)
(86) Internationale Anmeldenummer: PCT/EP2011/062038
(87) Internationale Veröffentlichungsnummer: WO 2012/025299

(56) Entgegenhaltungen:
- EP-A1- 0 543 453
- EP-A2- 1 415 904
- US-A- 5 015 918

## Beschreibung

### Stand der Technik

Die Erfindung betrifft ein Steuergerät und ein Verfahren zur Versorgung von Lasten eines Elektrofahrrads, und betrifft insbesondere die Detektion und Anzeige des Lichtausfalls bei Elektrofahrrädern. Üblicherweise sind zum Straßenverkehr zugelassene Fahrräder mit einer elektrischen Beleuchtung ausgestattet. Hierbei wird eine Stromquelle vorgesehen, die nur zur Versorgung der Beleuchtung dient.

Eine fehlerhafte Beleuchtung kann zu großen Gefahren im Straßenverkehr führen, wobei jedoch das von der Beleuchtung selbst vorgesehene Lichtsignal nicht auf den Fahrer gerichtet ist und somit der korrekte Betrieb für den Fahrer nicht ohne Weiteres überprüfbar ist. Dies betrifft insbesondere den Betrieb des Rücklichts.

Beispielsweise in der Druckschrift DE 20 114 272 U1 ist eine Schaltung dargestellt, die zwischen Beleuchtung und Stromquelle (ein Dynamo) vorgesehen ist und die anhand eines ermittelten Stromflusses den Betrieb der Beleuchtung überwacht und Fehler erfasst. Die zur Überwachung erforderliche Schaltung erfordert einen hohen Mehraufwand an Bauteilen, die ausschließlich zur Darstellung dieser Schaltung dienen.

EP 1 415 904 A2 betrifft ein Elektrofahrrad mit einem Antriebsmechanismus zum Übertragen einer Kraft von einem Pedal auf ein Hinterrad, einem Motorantriebsmechanismus zum Hilfsantreiben eines Vorderrads oder des Hinterrads durch einen Motor, einer Batterie zum Versorgen des Motors mit Elektrizität, einem Bremshebel, der von einem Fahrer betätigt wird, einem Bremsmechanismus zum Bremsen des Vorder- oder Hinterrads, das nicht von dem Motorantriebsmechanismus angetrieben wird, durch menschliche Kraft von dem Bremshebel, und einem Motorsteuerkreis zum Steuern des Motors derart, dass der Motor regenerativ gebremst wird, um als ein Stromgenerator zu wirken, wenn der Bremshebel betätigt wird. Oberbegriffe von jeweils Ansprüchen 1 und 6 sind aus Merkmalen dieses Dokuments EP 1 145 904 A2 gebildet. US 5,015,918 A betrifft ein Beleuchtungssystem für ein Fahrrad. Rote LEDs mit ausreichender Helligkeit und Effizienz werden für eine Fahrradrückleuchte eingesetzt. Eine Xenon-Abtastung bietet eine erweiterte Sicht auf den leuchtenden roten LED-Strahl, der als ein Fahrzeugrücklicht identifizierbar ist, wobei verteilte Blitze hoher Intensität der Abtastung direkt gesehen werden oder als Reflexionen der Umgebung beobachtet werden können. Der Blitz wird aus der Differenz zwischen der Versorgungsspannung und der von den LEDs benötigten Spannung eingeschaltet, damit der Strom durch die LEDs ohne Energieverschwendung oder Hinzufügen einer unproduktiven Schaltung gesteuert wird. Diese Elemente befinden sich in einem Retro-Reflektor, um eine Warnvorrichtung zu bilden.
EP 0 543 453 A1 betrifft eine Fahrradgangschaltung, die einen Aktuator zur Bewegung in vorbestimmten Positionen eines Kettenrad-Schaltmechanismus bewegt, um eine Kette zur Übertragung einer eines vorbestimmten Kettenrads entgegengesetzten Bewegung aus einer Vielzahl von koaxialen Zahnrädern verschiedener Durchmesser in Eingriff zu bringen. Der Aktor wird durch eine elektronische Steuereinrichtung gesteuert, mit der eine Vielzahl von Sensoren wie ein Sensor zur Erfassung der Geschwindigkeit des Fahrrads, ein Sensor zum longitudinalen Steigung oder Neigung des Fahrrads und gegebenenfalls ein Sensor der Belastung, die durch den Radfahrer auf die Pedale übertragen wird. Die elektronische Einrichtung vergleicht Werte, die von den Sensoren erfasst werden, mit Bereichen von voreingestellten Werten entsprechend den verschiedenen Kettenrädern und steuert Eingriffe der Kette mit dem Kettenrad mit einem Bereich von Werten, die die erfassten Werte umfassen.

Die DE 602 09 510 T2 offenbart ein Elektrofahrrad mit Beleuchtung, bei dem keine Detektion eines Lichtausfalls erfolgt.

Für Elektrofahrräder sind bislang nur Steuerungen bekannt, bei denen zwar die Aktivierung der Beleuchtung dargestellt wird (d.h. eine Spannungsabgabe), nicht aber der tatsächliche Betrieb überprüft wird.

Es ist daher eine Aufgabe der Erfindung, eine Beleuchtung für Elektrofahrräder mit Betriebsüberwachung vorzusehen, die auf effiziente Weise realisiert werden kann.

### Offenbarung der Erfindung

Diese Aufgabe wird gelöst durch ein Steuergerät und ein Verfahren gemäß den unabhängigen Ansprüchen.

Die Erfindung ermöglicht eine effiziente Umsetzung einer Beleuchtungsüberwachung, wobei nur ein Mindestmass an zusätzlichen Bauelementen erforderlich ist. Ferner erlaubt die Erfindung, einen Großteil von bereits vorhandenen elektrischer und elektronischer Komponenten eines Elektrofahrrads mitzuverwenden, so dass die erfindungsgemäßen Funktionen von Komponenten vorgesehen werden, die bereits andere Funktionen vorsehen. Die Erfindung kann insbesondere auf einfache Weise implementiert werden durch minimale Modifikation eines bestehenden Steuergeräts für Elektrofahrräder.

Die Erfindung eignet sich insbesondere für Elektrofahrräder, die einen Pedalantrieb und einen elektrischen Antrieb (d.h. Elektromotor mit Akkumulatoranschluss) aufweisen, wobei ein geeignetes Elektrofahrrad unterschiedliche Bauweisen aufweisen kann. Insbesondere ist die Erfindung auch geeignet für andere elektrisch betriebene Fahrzeuge, die mit einem Steuergerät zur Steuerung des elektrischen Antriebs ausgestattet sind und die keinen Pedalantrieb aufweisen, beispielsweise Elektroroller.

Die Erfindung sieht vor, dass eine Beleuchtungsschaltung in dem Steuergerät integriert ist, wobei die Beleuchtungsschaltung von dem Steuergerät mit Strom versorgt wird bzw. auf die gleiche Stromquelle wie das Steuergerät zurückgreift. Die Beleuchtungsschaltung hat einen Leuchtmittelanschluss, z.B. für ein Rücklicht und für ein Vorderlicht des Elektrofahrzeugs. Erfindungsgemäß wird der tatsächliche Betrieb der Beleuchtung überwacht, wobei dies über eine Anzeige hinausgeht, die angibt, ob an dem Leuchtmittelanschluss Spannung anliegt, oder nicht. Die Erfindung sieht vor, die tatsächliche Lichtabgabe zu überwachen, indem der elektrische Strom bei aktivierter Beleuchtung erfasst wird, aus dessen Stärke auf Fehler in der Beleuchtung bzw. auf eine tatsächliche Lichtabgabe geschlossen werden kann. Eine zugehörige Beleuchtungsüberwachung der Beleuchtungsschaltung ist daher ebenso in das Steuergerät integriert. Diese Beleuchtungsüberwachung sieht eine Stromerfassungsschaltung vor, die den zum Leuchtmittelanschluss fließenden Strom erfasst und auswertet (gegenüber einem spezifizierten Norm-Verbrauch, d.h. gegenüber einem geschlossenen oder einseitig offenen Stromstärkenintervall). Die Beleuchtungsschaltung kann teilweise oder vollständig durch Komponenten vorgesehen sein, die zusammen mit einem Teil oder der gesamten Schaltung des Steuergeräts in einer integrierten Schaltung integriert sind, beispielsweise einem Mikroprozessor.

Die Beleuchtungsschaltung verwendet mindestens eine der folgenden Komponenten des Steuergeräts: Die Stromversorgung (d.h. den Akkumulatoranschluss), eine Berechnungseinheit, die zur Ausführung von Steuerungs-, Regelungs- und/oder Anzeigefunktionen betreffend den elektrischen Antrieb dient, und die ferner den an dem Leuchtmittelanschluss abgegebenen Strom auswertet und ggf. ein Warnsignal vorsieht, einen Anzeigeausgang, der Information betreffend den elektrischen Antrieb abgibt und der ferner ein Ergebnis der Auswertung des an dem Leuchtmittelanschluss abgegebenen Stroms abgibt. Ferner kann eine Bedieneinheit des Steuergeräts auch zur Bedienung der Beleuchtungsschaltung verwendet werden.

Die Erfindung betrifft daher ein Steuergerät zur Steuerung eines elektrischen Antriebs eines Elektrofahrrads. Hierbei weist das Steuergerät einen Stromversorgungseingang auf, der zur Verbindung mit einem Akkumulator des Elektrofahrrads eingerichtet ist. Das Steuergerät weist ferner einen Ansteuerausgang auf, der zum Anschluss an den elektrischen Antrieb eingerichtet ist. Typischerweise sind derartige Ein- und Ausgänge mit Steckverbindungen versehen, um die Montage an das Elektrofahrrad zu erleichtern. Das Steuergerät weist ferner eine Beleuchtungsschaltung auf, die einen Leuchtmittelanschluss und eine Beleuchtungsüberwachung umfasst. Die Beleuchtungsüberwachung umfasst eine Stromerfassungsschaltung, die eingerichtet ist, den an dem Leuchtmittelanschluss abgegebenen elektrischen Strom direkt oder indirekt zu ermitteln. Insbesondere ist die Stromerfassungsschaltung in einem Ausgangsschaltkreis vorgesehen, der mit dem Leuchtmittelanschluss verbunden ist. Die Stromerfassungsschaltung ist in dem Hauptstrompfad der Beleuchtungsschaltung vorgesehen. Die Beleuchtungsüberwachung ist eingerichtet, ein Warnsignal vorzusehen, wenn der ermittelte elektrische Strom außerhalb eines Normstromintervalls liegt. Die Beleuchtungsüberwachung ist somit eingerichtet, den ermittelten elektrischen Strom auszuwerten. Der Strom kann direkt oder indirekt ermittelt werden. Da die Stromstärke bei Normbetrieb sich deutlich von der Stromstärke bei fehlerhaftem Betrieb (beispielsweise ein unterbrochener Stromkreis) unterscheidet, kann die Stromstärke direkt oder indirekt erfasst werden.

Eine Ausführungsform der Erfindung sieht vor, dass die Beleuchtungsschaltung mit dem Stromversorgungseingang des Steuergeräts verbunden ist und von dieser mit Strom versorgt wird. Beleuchtungsschaltung und Steuergerät nutzen daher dieselbe Stromquelle. Die Beleuchtungsschaltung kann einen Spannungsumsetzer zur Anpassung der Spannungshöhe an eine Normspannung der Beleuchtung, (z.B. 6 V) aufweisen, insbesondere wenn der Stromversorgungseingang des Steuergeräts eine deutlich höhere Spannung aufweist, beispielsweise 12 Volt, 24 Volt, 36 Volt, 40 Volt oder 48 Volt.

Die Stromerfassungsschaltung kann gemäß einer ersten Variante einen Shunt-Widerstand umfassen, der eingerichtet ist, anhand einer daran abfallenden Spannung den abgegebenen Strom zu ermitteln. Die Stromerfassungsschaltung kann beispielsweise an einen Vergleicher oder an einen A/D-Wandler des Steuergeräts angeschlossen sein, insbesondere an einen Vergleicher oder an einen A/D-Wandler eines Mikroprozessors, der auch Steuerungs- oder Regelungsfunktionen des elektrischen Antriebs des Elektrofahrrads umsetzt. Diese Variante lässt sich besonders einfach umsetzen, wobei die Stromerfassungsschaltung im Wesentlichen von dem Shunt-Widerstand umgesetzt wird. Der Shunt-Widerstand kann mit einem Verstärker kombiniert sein, dessen Eingang an dem Shunt-Widerstand angeschlossen ist, und der somit eingerichtet ist, die an dem Shunt-Widerstand abfallende Spannung zu verstärken, bevor diese ausgewertet wird. Der durch den Shunt-Widerstand fließende Beleuchtungsstrom ergibt sich gemäß dem ohmschen Gesetz aus der abfallenden Spannung und dem Leitwert des Shunt-Widerstands. Der Shunt-Widerstands weist einen geringen Widerstandswert auf, beispielsweise weniger als 10 Ohm, 1 Ohm, 100 mOhm oder weniger. Der Shunt-Widerstand ist an dem Leuchtmittelanschluss in Serie angeschlossen.

Eine zweite Variante sieht vor, dass die Stromerfassungsschaltung einen (Teil eines) Sense-FET umfasst. Die Stromerfassungsschaltung wird insbesondere durch den Sense-Anschluss eines Sense-FET vorgesehen, der beispielsweise eine Endstufe der Beleuchtungsschaltung vorsieht, die den Leuchtmittelanschluss mit Beleuchtungsstrom versorgt. Der Sense-FET ist mit dem Leuchtmittelanschluss zur Abgabe des Stroms (d.h. des Beleuchtungsstroms) verbunden. Die Stromerfassungsschaltung ist eingerichtet, anhand des Potentials eines Sense-Anschlusses des Sense-FETs den abgegebenen Strom zu ermitteln. Gemäß einer äquivalenten Betrachtungsweise wird der an den Leuchtmittelanschluss abgegebene Strom ermittelt durch Erfassen des Widerstands der Zelle(n) des Sense-FETs, die mit dem Sense-Anschluss verbunden sind (ist), bzw. durch Erfassen des Stroms, der durch die Zelle(n) des Sense-FETs fließt. Auch diese Variante kann mit einem Verstärker (bsp. ein Operationsverstärker) kombiniert sein, der mit dem Sense-Anschluss verbunden ist, um die am Sense-Anschluss anliegende Spannung zu verstärken, bevor diese erfindungsgemäß ausgewertet wird.

Eine dritte Variante sieht vor, dass die Beleuchtungsschaltung einen Spannungsumsetzer umfasst, der an dem Stromversorgungseingang angeschlossen ist, insbesondere einen Abwärtswandler. Der Spannungsumsetzer wandelt, wie oben beschrieben, die Spannung am Stromversorgungseingang des Steuergeräts (deren Höhe an den Antrieb angepasst ist) in eine Spannung um, die an die Leuchtmittel bzw. an die Beleuchtung angepasst ist, wobei die Leuchtmittel bzw. die Beleuchtung an den Leuchtmittelanschluss angeschlossen werden können bzw. kann. Ein derartiger Spannungsumsetzer umfasst üblicherweise eine Regelung, um die Ausgangsspannung auf einen gewünschten Wert zu Regeln. Die Regelung wird insbesondere über ein Tastverhältnis eines Zerhackers des Spannungsumsetzers ausgeführt, der eine Strompumpe speist bzw. darstellt, wobei das Tastverhältnis ein Maß für die Belastung am Ausgang (bezogen auf die Eingangsspannung) ist. Anstatt eines Tastverhältnisses eines Regelsignals kann auch dessen Potential als Maß verwendet werden, insbesondere ein Effektivwert des Potentials. Daher wird gemäß dieser Variante die Stromerfassungsschaltung von einem Abgriff einer derartigen Regelschaltung des Spannungsumsetzers vorgesehen. Ein derartiges Potential oder ein derartiges Tastverhältnis eines am Abgriff vorliegenden Signals (d.h. Regelsignals) steigt oder fällt mit der Stärke des am Leuchtmittelanschluss abgegebenen Stroms. Somit ist das Tastverhältnis oder das Potential über eine eindeutige monotone Funktion, insbesondere eine zumindest stückweise lineare oder proportionale Funktion mit dem abzugebenden Strom verknüpft. Die Funktion ergibt sich unmittelbar aus den Eigenschaften des Spannungsumsetzers bzw. aus dessen Kennlinie.

Alternativ kann zur Steuerung des an dem Leuchtmittelanschluss abgegebenen elektrischen Stroms (d.h. des Beleuchtungsstroms) auch ein integrierter Schalter verwendet werden. Der integrierte Schalter umfasst ein Schalterelement und eine Stromerfassungsschaltung. Das Schalterelement und die Stromerfassungsschaltung sind in einem Gehäuse integriert, vorzugsweise als integrierte Schaltung. Das Schalterelement kann durch eine Endstufe bzw. durch einen elektronischen Schalter realisiert sein. Die Stromerfassungsschaltung kann (teilweise) in den elektronischen Schalter integriert sein bzw. in eine Ansteuerschaltung des elektronischen Schalters (die ebenso in die integrierte Schaltung integriert ist wie der Schalter bzw. das Schalterelement und die Stromerfassungsschaltung). Dadurch kann ein übliches Steuergerät für den elektrischen Antrieb eines Elektrofahrrads verwendet werden, wobei erfindungsgemäßen Funktionen durch ein einziges (integriertes Bauteil) vorgesehen werden, welches ferner die Schaltung des Beleuchtungsstroms übernimmt.

Der integrierte Schalter beinhaltet vorzugweise einen Stromspiegel. Über den Stromspiegel kann alternativ der Strom überwacht werden, der an dem Leuchtmittelanschluss abgegeben wird. Der integrierte Schalter bietet den Vorteil einer noch höheren Synergie mit dem bestehenden System. Der integrierte Schalter kann über einen Spannungsumsetzer mit Strom des Akkumulators versorgt werden, wobei alternativ der integrierte Schalter einen Spannungsumsetzer umfasst, um unmittelbar mit dem Bordnetz (d.h. dem Akkumulator, d.h. dem Traktionsakkumulator) des Elektrofahrrads verbunden zu werden. Der Schalter ist in die Antriebssteuerung des Elektrofahrrads integriert. Der elektronische Schalter wird in Form eines integrierten Schalterbausteins vorgesehen, der über eine Stromerfassung verfügt (bsp. Stromerfassung mittels eines Stromspiegels des Schalters). Der Strom wird ermittelt durch Erfassung des gespiegelten Stroms.

Die Stromerfassungsschaltung kann daher mit einem Stromspiegel realisiert werden, der den Leuchtmittelanschluss versorgt (d.h. mit diesem zur Stromabgabe verbunden ist) und dessen gespiegelter Strom oder eine hierzu äquivalente Betriebsgröße (bsp. eine Steuerspannung innerhalb des Stromspiegels) den Strom wiedergibt, der an den Leuchtmittelanschluss abgegeben wird. Der integrierte Schalter kann einen Transistor umfassen, der als Endstufe bzw. Schalterelement dient, insbesondere einen MOSFET oder einen Bipolartransistor, und der einen Teil des Stromspiegels bildet. Ein Gate- oder Basispotential gibt den Strom wieder, mit dem der Leuchtmittelanschluss versorgt wird. Insbesondere der Gate- oder Basisanschluss eines der Transistoren des Stromspiegels dient hierbei als (Teil der) Stromerfassungsschaltung. Der Stromspiegel bzw. der Schalter ist in das Steuergerät integriert, vorzugsweise indem das integrierte Bauteil, welches Schalterelement und Stromerfassungsschaltung umfasst, in das Steuergerät integriert ist, beispielsweise auf der selben Leiterplatte wie ein Teil oder alle Komponenten des Steuergeräts.

Eine weitere Ausführungsform der Erfindung sieht vor, dass das Steuergerät einen Anzeigeausgang umfasst, an dem von dem Steuergerät Anzeigedaten betreffend den elektrischen Antrieb bereitgestellt werden. Erfindungsgemäß ist der Anzeigeausgang ferner eingerichtet, das Warnsignal abzugeben oder den erfassten Strom anzuzeigen. Eine Alternative sieht vor, dass das Steuergerät einen akustischen Wandler umfasst, der das Warnsignal als akustisches Signal abgibt. Das Steuergerät ist eingerichtet, die Anzeigedaten betreffend den elektrischen Antrieb und das Warnsignal als ein gemeinsames Anzeigesignal vorzusehen. Hierzu kann das Steuergerät eine Anzeigeschaltung umfassen, die aus Signalen betreffend den Betrieb des elektrischen Antriebs und aus dem Warnsignal ein gemeinsames Anzeigesignal vorsieht, das von einer Anzeige (bsp. einer LCD-Anzeige) verarbeitet und angezeigt werden kann. Eine besondere Ausführungsform der Erfindung sieht vor, dass das Steuergerät die Anzeige (oder den akustischen Wandler) selbst umfasst, das vorzugsweise über ein Kabel und eine Steckverbindungen mit dem Steuergerät verbunden ist, oder mit dem Steuergerät in ein gemeinsames Gehäuse integriert ist.

Weiterhin kann das Normstromintervall des Steuergeräts, das zur Auswertung des abgegebenen Stroms herangezogen wird, ein einseitig offenes Intervall sein und somit durch einen einzigen Grenzwert spezifiziert sein, oder ein geschlossenes Intervall sein, das durch zwei Grenzwerte spezifiziert ist, d.h. durch eine obere Grenze und eine untere Grenze. Das Normstromintervall ist daher gemäß einer ersten Ausführungsform nach oben offen. Dadurch werden Unterbrechungen an dem Leuchtmittelanschluss erfasst, wenn der erfasste Strom die untere Grenze des Normstromintervalls unterschreitet, beispielsweise bei einer Unterbrechung des Stromkreises, insbesondere bei einem durchgebrannten Leuchtmittel. Das Normstromintervall ist gemäß einer zweiten Ausführungsform nach oben offen. Dadurch werden Kurzschlüsse in Beleuchtungsschaltkreis erfasst, bzw. unerwünschte Leitwerte parallel zu den Leuchtmitteln, die den Betrieb der Leuchtmittel beeinträchtigen. Das Normstromintervall ist gemäß einer dritten Ausführungsform ein geschlossenes Intervall. Mit dieser Ausführungsform werden sowohl Unterbrechungen als auch Kurzschlüsse an dem Leuchtmittelanschluss bzw. in dem Beleuchtungsschaltkreis erfasst. Die Auswertung des Stroms anhand des Normintervalls wird vorgesehen durch einen Vergleicher oder eine andere Einrichtung, die eingerichtet ist, einen Vergleich auszuführen, beispielsweise ein programmierbarer Mikroprozessor.

Eine weitere Ausführungsform der Erfindung sieht vor, dass das der Leuchtmittelanschluss einen Rücklichtkontakt und einen Vorderlichtkontakt umfasst, die beide von der Beleuchtungsschaltung versorgt werden. Insbesondere werden der Rücklichtkontakt und der Vorderlichtkontakt von einer gemeinsamen Endstufe der Beleuchtungsschaltung versorgt bzw. sind an diesen angeschlossen. Der Rücklichtkontakt und der Vorderlichtkontakt sind jeweils als Steckkontakte oder Schraubkontakte ausgeführt, und umfassen jeweils zumindest einen individuellen Pluspotentialanschluss, wobei der Rücklichtkontakt und der Vorderlichtkontakt vorzugsweise jeweils einen Masseanschluss aufweisen.

Werden beide Kontakte von der selben Endstufe versorgt (insbesondere die Endstufe des Spannungswandlers), so ist eine Steuerung der Endstufe mit der Beleuchtungsüberwachung verbunden, die eingerichtet ist, die Endstufe abzuschalten, sobald ein Strom außerhalb des Normintervalls erfasst wurde. Ferner kann das Steuergerät einen Unterbrecher umfassen, der mit der Beleuchtungsüberwachung verbunden ist, von dieser angesteuert wird, und der den Stromfluss zum Leuchtmittelanschluss unterbricht, wenn ein Strom außerhalb des Normintervalls erfasst wird. Der Unterbrecher ist daher dem Leuchtmittelanschluss vorgeschaltet. Das Steuergerät ist eingerichtet, den Stromfluss zum Rücklichtkontakt und zum Vorderlichtkontakt zu unterbrechen, sofern ein Strom außerhalb des Normintervalls erfasst wird. Wenn daher ein Stromfluss zum Rücklichtkontakt (alternativ: zum Vorderlichtkontakt) außerhalb des Normintervalls erfasst wird, ist das Steuergerät eingerichtet, dies zu erkennen, und an den Unterbrecher ein Steuersignal abzugeben, das den Unterbrecher dazu veranlasst, die Versorgung des Vorderlichtkontakts (alternativ: des Rücklichtkontakts) zu unterbrechen. Der Unterbrecher kann individuell mit den Rücklicht- und Vorderlichtkontakten verbunden sein oder kann über eine gemeinsame Verbindung mit den Rücklicht- und Vorderlichtkontakten verbunden sein.

Die Erfindung wird ferner realisiert mittels eines Verfahrens zur Versorgung elektrischer Lasten eines Elektrofahrrads. Das Verfahren sieht vor, einen elektrischen Antrieb des Elektrofahrrads als eine der elektrischen Lasten mittels eines Steuergeräts zu versorgen. Das Steuergerät bezieht elektrische Leistung von einem Akkumulator des Elektrofahrrads, der insbesondere die elektrische Traktionsleistung bereitstellt. Als eine weitere der elektrischen Lasten wird eine Beleuchtung des Elektrofahrrads von einer Beleuchtungsschaltung des Steuergeräts mit elektrischem Strom versorgt. Eine erfindungsgemäße Beleuchtungsüberwachung des Steuergeräts überwacht den Betrieb durch Erfassen des Stroms, mit der die Beleuchtungsschaltung von dem Steuergerät versorgt wird, oder mit der die Beleuchtungsschaltung die Beleuchtung versorgt. Der zur Versorgung vorgesehene Strom wird von einer Stromerfassungsschaltung der Beleuchtungsschaltung erfasst. Die Stromerfassungsschaltung wird von dem Steuergerät ausgebildet, so dass diese in das Steuergerät schaltungstechnisch integriert ist. Bevorzugt wird der Strom über einen integrierten Schalter erfasst, dessen Spannungsspiegel ein Signal vorsieht, das den abgegebenen Strom wiedergibt.

Alternativ wird der zur Versorgung des Beleuchtung vorgesehene Strom erfasst durch Erfassen eines Potentials, das ein Sense-Anschluss eines Sense-FETs der Beleuchtungsschaltung aufweist, über den die Beleuchtung versorgt wird, oder aber über einen Shunt-Widerstand. Je nach Beschaltung kann der Strom auch anhand eines Stroms gemessen werden, der zu dem Sense-Anschluss hin oder von diesem weg fließt, oder anhand eines Widerstands an dem Sense-Anschluss (beispielsweise gegenüber Drain oder Source des Sense-FETs).

Eine weitere Möglichkeit besteht darin, dass der zur Versorgung der Beleuchtung vorgesehene Strom erfasst wird durch Erfassen eines Tastverhältnisses oder einer Spannung (oder eines anderen Signals), das bzw. die eine Regelgröße eines Spannungsumsetzers ist. Der Spannungsumsetzer wandelt eine Spannung des Akkumulators in eine Spannung um, mit der die Beleuchtung versorgt wird. Hierbei wird zur Regelung bzw. Steuerung der Ausgangsspannung (d.h. der Versorgungsspannung der Beleuchtung) eine Spannung umgewandelt, wobei das Tastverhältnis bzw. die zur Regelung verwendete Spannung eindeutig von der Last abhängt, die am Spannungswandler angeschlossen ist. Insbesondere bei hohen Lastströmen (d.h. Ausgangsströmen) ist das Tastverhältnis hoch, mit dem im Rahmen der Umwandlung eine Eingangspannung zerhackt wird. In gleicher Weise gibt eine Spannung, die eine innere Regelungsgröße des Umwandlungsprozesses darstellt, den Laststrom wieder, so dass durch Auswertung des entsprechenden Signals der abgegebene Strom (= der Laststrom) ermittelt werden kann.

Das erfindungsgemäße Verfahren sieht ferner vor, dass das Überwachen umfasst: Vergleichen des Stroms mit einem Normstromintervall, das eine Stromstärke wiedergibt, die typischerweise während des fehlerfreien Betriebs der Beleuchtung auftritt. Das Vergleichen wird ausgeführt von der Beleuchtungsüberwachung des Steuergeräts.

Weiterhin sieht das erfindungsgemäße Verfahren vor, dass Anzeigedaten, die den elektrischen Antrieb betreffen, von dem Steuergerät erzeugt werden. Ein Warnsignal wird vorgesehen, wenn durch das Überwachen ein fehlerhafter Betrieb ermittelt wird, wobei das Steuergerät die Anzeigedaten und das Warnsignal als ein gemeinsames Anzeigesignal ausgibt, beispielsweise als Ansteuersignal einer LCD-Anzeige.

Schließlich sieht das erfindungsgemäße Verfahren vor, das als Beleuchtung ein Rücklicht und ein Vorderlicht des Elektrofahrrads von dem Steuergerät versorgt werden. Das Versorgen wird vorzugsweise von einer gemeinsamen Endstufe der Beleuchtungsschaltung realisiert. Zudem kann das Versorgen beider Lichter unterbrochen werden, wenn zumindest eines der Lichter eine Stromaufnahme außerhalb des Normbereichs aufweist.

Die Erfindung wird ferner realisiert durch ein Elektrofahrrad oder durch einen Elektroroller, der das erfindungsgemäße Steuergerät umfasst bzw. das erfindungsgemäße Verfahren ausführt.

### Kurze Beschreibung der Zeichnungen

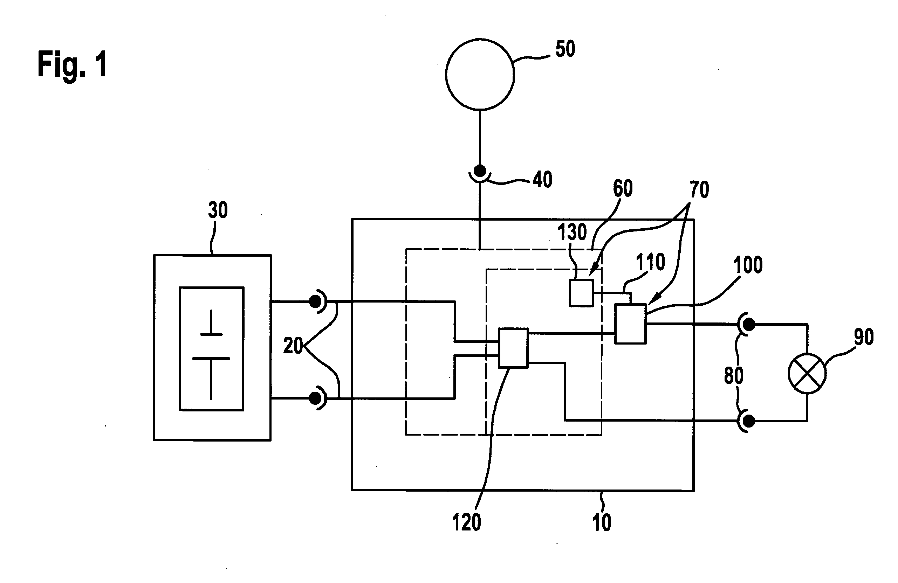

Die Figur 1 zeigt eine Ausführungsform eines erfindungsgemäßen Steuergeräts in symbolischer Schaltbilddarstellung.

Das in Figur 1 dargestellte Steuergerät 10 umfasst einen Stromversorgungseingang 20, der in der dargestellten Anwendung mit einem Akkumulator 30 verbunden ist. Das Steuergerät 10 umfasst ferner einen Ansteuerausgang 40, der in der dargestellten Anwendung mit einem Antrieb 50 bzw. Elektromotor eines Elektrofahrrads (nicht dargestellt) verbunden ist. Das Steuergerät 10 umfasst eine Steuerungskomponente 60, die mindestens eine Funktion zur Steuerung des Elektroantriebs vorsieht, insbesondere die Bereitstellung eines Stroms an den Antrieb 50 gemäß einer gewünschten Geschwindigkeit oder Antriebsleistung. Das Steuergerät ist insbesondere ein Mikrocontroller oder eine andere Steuerschaltung, die ferner zumindest einen Teil der erfindungsgemäßen Komponenten realisiert, insbesondere einen zumindest einen Teil der Beleuchtungsschaltung 70.

Die Beleuchtungsschaltung 70 umfasst einen Leuchtmittelanschluss 80, an den in der dargestellten Anwendung Beleuchtungsmittel 90 angeschlossen sind. Die Beleuchtungsüberwachung umfasst eine Stromerfassungsschaltung 100 als Teil der Beleuchtungsschaltung, die jedoch in der dargestellten Ausführungsform nicht von Komponenten des Steuergeräts realisiert wird, die Funktionen betreffend den Betrieb des Antriebs 50 realisieren. Die Stromerfassungsschaltung 100 kann insbesondere als niederohmiger Reihenwiderstand (Shunt-Widerstand) vorgesehen sein, dessen Potential über eine Verbindung 110 der restlichen Beleuchtungsschaltung 70 (insbesondere einer Auswerteschaltung der Beleuchtungsschaltung) zugefülirt wird.

Die Beleuchtungsschaltung umfasst ferner einen Spannungsumsetzer (Abwärtswandler) 120. Dieser kann, wie dargestellt, durch Komponenten des Steuergeräts vorgesehen werden, die Funktionen betreffend den Betrieb des Antriebs 50 realisieren, beispielsweise die Spannungsversorgung von Logikelementen einer Antriebssteuerung. Alternativ kann der Spannungsumsetzer der Beleuchtungsschaltung als individuelles Bauteil umgesetzt sein, der ausschließlich Strom für die Beleuchtung erzeugt. Der Spannungsumsetzer 120 ist mit dem Stromversorgungseingang 20 verbunden, um von diesem versorgt zu werden, und ist mit dem Leuchtmittelanschluss 80 verbunden, um das angeschlossene Leuchtmittel 90 zu betreiben.

Eine alternative Ausführungsform sieht vor, dass die Stromerfassungsschaltung dem Spannungsumsetzer 120 vorgeschaltet ist, um anhand dessen Stromverbrauchs auf den Strom zu schließen, der an den Leuchtmittelanschluss geliefert wird.

Ein Unterbrecher kann zwischen dem Umsetzer 120 und dem Leuchtmittelanschluss 80 vorgesehen sein. Ein derartiger Umsetzer 120 wird von einer Auswerteschaltung (beispielsweise ein Vergleicher) angesteuert, um bei erfassten Stromwerten außerhalb des Normbereichs die Stromzuführ zu dem Leuchtmittelanschluss 80 zu unterbrechen.

Bei einer weiteren Alternative ist die Stromerfassungsschaltung 100 in den Umsetzer 120 integriert, insbesondere wenn die Stromerfassungsschaltung in Form eines Sense-FETs ausgebildet ist, der die Endstufe des Umsetzers 120 bildet, oder ein Anschluss des Umsetzers ein Signal liefert, das die an den Leuchtmittelanschluss 80 abgegebene Stromstärke wiedergibt.

Eine Auswerteschaltung 130 kann ebenso von Komponenten des Steuergeräts vorgesehen werden, die auch Funktionen betreffend den Betrieb des Antriebs 50 realisieren, beispielsweise ein Mikroprozessor, dessen Vergleicher (Komparator) ein Signal, das die erfasste Stromstärke wiedergibt, mit dem Normstromintervall (oder Normstrombereich) vergleicht und gegebenenfalls ein Warnsignal ausgibt und/oder einen Unterbrecher aktiviert. Das Warnsignal kann akustisch und/oder visuell umgesetzt werden, insbesondere visuell mittels Anzeigekomponenten, die auch Funktionen betreffend den Betrieb des Antriebs 50 (Geschwindigkeit, Leistung, Wegstrecke, usw.) anzeigen.

## Patentansprüche

1. Steuergerät zur Steuerung eines elektrischen Antriebs eines Elektrofahrrads, wobei das Steuergerät (10) einen Stromversorgungseingang (20) eingerichtet zur Verbindung mit einem Akkumulator (30) des Elektrofahrrads und einen Ansteuerausgang (40) eingerichtet zum Anschluss an den elektrischen Antrieb umfasst, **dadurch gekennzeichnet, dass** das Steuergerät (10) ferner eine Beleuchtungsschaltung (70) mit einem Leuchtmittelanschluss (80) und einer Beleuchtungsüberwachung umfasst, wobei die Beleuchtungsüberwachung eine Stromerfassungsschaltung (100) umfasst, die eingerichtet ist, den an dem Leuchtmittelanschluss (80) abgegebenen elektrischen Strom direkt oder indirekt zu ermitteln, und die Beleuchtungsüberwachung eingerichtet ist, ein Warnsignal vorzusehen, wenn der ermittelte elektrische Strom außerhalb eines Normstromintervall liegt.

2. Steuergerät nach Anspruch 1, wobei die Beleuchtungsschaltung (70) mit dem Stromversorgungseingang (20) des Steuergeräts (10) verbunden ist und von dieser mit Strom versorgt wird, wobei die Stromerfassungsschaltung (100) einen Shunt-Widerstand umfasst und eingerichtet ist, anhand einer daran abfallenden Spannung den abgegebenen Strom zu ermitteln, oder einen Sense-FET umfasst, der mit dem Leuchtmittelanschluss zur Abgabe des Stroms verbunden ist, und die Stromerfassungsschaltung (100) eingerichtet ist, anhand des Potentials eines Sense-Anschlusses des Sense-FETs den abgegebenen Strom zu ermitteln, oder wobei die Beleuchtungsschaltung (70) einen Spannungsumsetzer (120) umfasst, insbesondere einen Abwärtswandler, der an dem Stromversorgungseingang angeschlossen ist, wobei die Stromerfassungsschaltung (100) von einem Abgriff einer Regelschaltung des Spannungsumsetzers (120) vorgesehen wird, wobei ein Potential oder ein Tastverhältnis eines am Abgriff vorliegenden Signals mit der Stärke des am Leuchtmittelanschluss (80) abgegebenen Stroms steigt oder fällt, oder wobei die Stromerfassungsschaltung (100) von einem Stromspiegel vorgesehen wird, der den Leuchtmittelanschluss versorgt und dessen gespiegelter Strom oder eine hierzu äquivalente Betriebsgröße den Strom wiedergibt, der an den Leuchtmittelanschluss (80) abgegeben wird.

3. Steuergerät nach Anspruch 1 oder 2, das ferner einen Anzeigeausgang umfasst, an dem von dem Steuergerät (10) Anzeigedaten betreffend den elektrischen Antrieb bereitgestellt werden, wobei der Anzeigeausgang ferner eingerichtet ist, das Warnsignal abzugeben und das Steuergerät eingerichtet ist, die Anzeigedaten betreffend den elektrischen Antrieb und das Warnsignal als ein gemeinsames Anzeigesignal vorzusehen.

4. Steuergerät nach einem der vorangehenden Ansprüche, wobei das Normstromintervall nach oben offen ist, um Unterbrechungen an dem Leuchtmittelanschluss (80) zu erfassen, nach oben offen ist, um Kurzschlüsse an dem Leuchtmittelanschluss (80) zu erfassen, und ein geschlossenes Intervall ist, um Unterbrechungen und Kurzschlüsse an dem Leuchtmittelanschluss zu erfassen.

5. Steuergerät nach einem der vorangehenden Ansprüche, wobei der Leuchtmittelanschluss (80) einen Rücklichtkontakt und einen Vorderlichtkontakt umfasst, die beide von der Beleuchtungsschaltung (70) versorgt werden, insbesondere von einer gemeinsamen Endstufe der Beleuchtungsschaltung (70).

6. Verfahren zur Versorgung elektrischer Lasten eines Elektrofahrrads, umfassend: Versorgen eines elektrischen Antriebs des Elektrofahrrads als eine der elektrischen Lasten mittels eines Steuergeräts (10), das elektrische Leistung von einem Akkumulator des Elektrofahrrads bezieht, **dadurch gekennzeichnet, dass** als eine weitere der elektrischen Lasten eine Beleuchtung des Elektrofahrrads von einer Beleuchtungsschaltung (70) des Steuergerät (10) mit elektrischem Strom versorgt wird, wobei eine Beleuchtungsüberwachung des Steuergeräts den Betrieb überwacht durch Erfassen des Stroms, mit der die Beleuchtungsschaltung (70) von dem Steuergerät versorgt wird, wobei der Strom von einer Stromerfassungsschaltung (100) der Beleuchtungsschaltung (70) erfasst wird und die Stromerfassungsschaltung von dem Steuergerät ausgebildet wird.

7. Verfahren nach Anspruch 6, wobei der Strom erfasst wird durch Erfassen einer Spannung, die an einem Shunt-Widerstand der Stromerfassungsschaltung (100) abfällt, eines Potentials, das ein Sense-Anschluss eines Sense-FETs der Beleuchtungsschaltung (70) aufweist, über den die Beleuchtung versorgt wird, über einen Strom oder eine Spannung eines Stromspiegels eines integrierten Schalterbausteins oder eines Tastverhältnisses oder einer Spannung, das bzw. die eine Regelgröße eines Spannungsumsetzers ist, der eine Spannung des Akkumulators in eine Spannung wandelt, mit der die Beleuchtung versorgt wird.

8. Verfahren nach Anspruch 6 oder 7, wobei das Überwachen umfasst: Vergleichen des Stroms mit einem Normstromintervall, das eine Stromstärke wiedergibt, die typischerweise während des fehlerfreien Betriebs der Beleuchtung auftritt, und wobei das Vergleichen ausgeführt wird von der Beleuchtungsüberwachung des Steuergeräts (10).

9. Verfahren nach einem der Ansprüche 6 - 8, wobei ferner Anzeigedaten, die den elektrischen Antrieb betreffen, von dem Steuergerät (10) erzeugt werden, und ein Warnsignal vorgesehen wird, wenn durch das Überwachen ein fehlerhafter Betrieb ermittelt wird, wobei das Steuergerät (10) die Anzeigedaten und das Warnsignal als ein gemeinsames Anzeigesignal ausgibt.

10. Verfahren nach einem der Ansprüche 6 - 9, wobei als Beleuchtung ein Rücklicht und ein Vorderlicht des Elektrofahrrads von dem Steuergerät (10) versorgt werden, vorzugsweise von einer gemeinsamen Endstufe der Beleuchtungsschaltung (70).

## Claims

1. Control device for controlling an electric drive of an electric bicycle, wherein the control device (10) comprises a power supply input (20) designed for connection to a rechargeable battery (30) of the electric bicycle, and an actuation output (40), designed for connection to the electric drive, **characterized in that** the control device (10) further comprises a lighting circuit (70) comprising a light-emitting means connection (80) and a lighting monitoring system, wherein the lighting monitoring system comprises a current-sensing circuit (100), which is designed to determine, directly or indirectly, the electric current output at the light-emitting means connection (80), and the lighting monitoring system is designed to provide a warning signal when the determined electric current is outside a normal current range.

2. Control device according to Claim 1, wherein the lighting circuit (70) is connected to the power supply input (20) of the control device (10) and current is supplied to said lighting circuit by said power supply input, wherein the current-sensing circuit (100) comprises a shunt resistor and is designed to determine the output current on the basis of a voltage drop across said shunt resistor, or comprises a sense FET, which is connected to the light-emitting means connection for outputting the current, and the current-sensing circuit (100) is designed to determine the output current on the basis of the potential of a sense connection of the sense FET, or wherein the lighting circuit (70) comprises a voltage converter (120), in particular a buck converter, which is connected to the power supply input, wherein the current-sensing circuit (100) is provided by a tap of a regulating circuit of the voltage converter (120), wherein a potential or a duty factor of a signal present at the tap increases or falls with the intensity of the current output at the light-emitting means connection (80), or wherein the current-sensing circuit (100) is provided by a current mirror, which supplies power to the light-emitting means connection, and the mirrored current of said current mirror or an operational variable which is equivalent to this reproduces the current which is output to the light-emitting means connection (80).

3. Control device according to Claim 1 or 2, which furthermore comprises a display output, at which display data relating to the electric drive are provided by the control device (10), wherein the display output is furthermore designed to output the warning signal, and the control device is designed to provide the display data relating to the electric drive and the warning signal as a joint display signal.

4. Control device according to one of the preceding claims, wherein the normal current range is open at the top in order to detect interruptions at the light-emitting means connection (80), is open at the top in order to detect short circuits at the light-emitting means connection (80), and is a closed range in order to detect interruptions and short circuits at the light-emitting means connection.

5. Control device according to one of the preceding claims, wherein the light-emitting means connection (80) comprises a rear light contact and a front light contact, which are both supplied by the lighting circuit (70), in particular by a common output state of the lighting circuit (70).

6. Method for supplying power to electrical loads of an electric bicycle, comprising: supplying power to an electric drive of the electric bicycle as one of the electrical loads by means of a control device (10), which draws electric power from a rechargeable battery of the electric bicycle, **characterized in that** lighting of the electric bicycle is supplied electric current by a lighting circuit (70) of the control device (10) as a further one of the electrical loads, wherein a lighting monitoring system of the control device monitors the operation by sensing the current which is supplied to the lighting circuit (70) by the control device, wherein the current is sensed by a current-sensing circuit (100) of the lighting circuit (70), and the current-sensing circuit is formed by the control device.

7. Method according to Claim 6, wherein the current is sensed by sensing a voltage which forms as a voltage drop across a shunt resistor of the current-sensing circuit (100), a potential present at a sense connection of a sense FET of the lighting circuit (70), via which the lighting is supplied, via a current or a voltage of a current mirror of an integrated switch module or a duty factor or a voltage which is a controlled variable of a voltage converter, which converts a voltage of the rechargeable battery into a voltage which is supplied to the lighting.

8. Method according to Claim 6 or 7, wherein the monitoring comprises: comparing the current with a normal current range which reproduces a current intensity which typically occurs during fault-free operation of the lighting, and wherein the comparison is implemented by the lighting monitoring system of the control device (10).

9. Method according to one of Claims 6-8, wherein, in addition, display data which relate to the electric drive are generated by the control device (10), and a warning signal is provided when faulty operation is determined by the monitoring, wherein the control device (10) outputs the display data and the warning signal as a joint display signal.

10. Method according to one of Claims 6-9, wherein, as lighting, a rear light and a front light of the electric bicycle are supplied by the control device (10), preferably by a joint output stage of the lighting circuit (70).

## Revendications

1. Appareil de commande destiné à commander un système d'entraînement électrique d'une bicyclette électrique, dans lequel l'appareil de commande (10) comprend une entrée d'alimentation en courant (20) conçue pour être reliée à un accumulateur (30) de la bicyclette électrique et une sortie de commande (40) conçue pour être raccordée au système d'entraînement électrique, **caractérisé en ce que** l'appareil de commande (10) comprend en outre un circuit d'éclairage (70) comportant un connecteur pour moyen lumineux (80) et un dispositif de contrôle d'éclairage, dans lequel le dispositif de contrôle d'éclairage comprend un circuit de détection de courant (100) qui est conçu pour déterminer directement ou indirectement le courant électrique délivré au connecteur pour moyen lumineux (80), et le dispositif de contrôle d'éclairage est conçu pour délivrer un signal d'alarme lorsque le courant électrique déterminé se situe en dehors d'un intervalle de courant normal.

2. Appareil de commande selon la revendication 1, dans lequel le circuit d'éclairage (70) est relié à l'entrée d'alimentation en courant (20) de l'appareil de commande (10) et est alimenté en courant par ce dernier, dans lequel le circuit de détection de courant (100) comprend une résistance shunt et est conçu pour déterminer le courant délivré, sur la base d'une chute de tension appliquée à celle-ci, ou comprend un FET de détection qui est relié au connecteur pour moyen lumineux pour délivrer le courant, et le circuit de détection de courant (100) est conçu pour déterminer le courant délivré sur la base du potentiel d'un connecteur de détection du FET de détection, ou dans lequel le circuit d'éclairage (70) comprend un convertisseur de tension (120), notamment un transformateur abaisseur qui est raccordé à l'entrée d'alimentation en courant, dans lequel le circuit de détection de courant (100) est muni d'une dérivation d'un circuit de régulation du convertisseur de tension (120), dans lequel un potentiel ou un rapport cyclique d'un signal appliqué à la dérivation augmente ou diminue en fonction de l'intensité du courant délivré sur le connecteur pour moyen lumineux (80), ou dans lequel le circuit de détection de courant (100) est muni d'un miroir de courant qui alimente le connecteur pour moyen lumineux et dont le courant miroir ou une grandeur équivalente à celui-ci représente le courant qui est délivré au connecteur pour moyen lumineux (80).

3. Appareil de commande selon la revendication 1 ou 2, comprenant en outre une sortie d'indication à laquelle des données d'indication concernant le système d'entraînement électrique sont fournies par l'appareil de commande (10), dans lequel la sortie d'indication est en outre conçue pour délivrer le signal d'alarme et l'appareil de commande est conçu pour fournir les données d'indication concernant l'entraînement électrique et le signal d'alarme sous la forme d'un signal d'affichage commun.

4. Appareil de commande selon l'une quelconque des revendications précédentes, dans lequel ledit intervalle de courant normal n'a pas de limite supérieure afin de détecter des interruptions sur le connecteur pour moyen lumineux (80), n'a pas de limite supérieure afin de détecter des courts-circuits sur le connecteur pour moyen lumineux (80), et est un intervalle fermé afin de détecter des interruptions et des courts-circuits sur le connecteur pour moyen lumineux.

5. Appareil de commande selon l'une quelconque des revendications précédentes, dans lequel le connecteur pour moyen lumineux (80) comprend un contact de feu arrière et un contact de feu avant qui sont tous deux alimentés par le circuit d'éclairage (70), notamment par un étage final commun du circuit d'éclairage (70).

6. Procédé d'alimentation de charges électriques d'un véhicule électrique, consistant à : alimenter un système d'entraînement électrique de la bicyclette électrique sous la forme de l'une des charges électriques au moyen d'un appareil de commande (10) qui obtient une puissance électrique d'un accumulateur de la bicyclette électrique, **caractérisé en ce que**, tant que l'autre des charges électriques, un éclairage de la bicyclette électrique est alimenté en courant électrique par un circuit d'éclairage (70) de l'appareil de commande (10), dans lequel un dispositif de contrôle d'éclairage de l'appareil de commande surveille le fonctionnement en détectant le courant avec lequel le circuit d'éclairage (70) est alimenté par l'appareil de commande, dans lequel le courant est détecté par un circuit de détection de courant (100) du circuit d'éclairage (70) et le circuit de détection de courant est constitué par l'appareil de commande.

7. Procédé selon la revendication 6, dans lequel le courant est détecté par détection d'une tension qui s'abaisse sur une résistance shunt du circuit de détection de courant (100), d'un potentiel qui présente une connexion de détection d'un FET de détection du circuit d'éclairage (70), potentiel par l'intermédiaire duquel le dispositif d'éclairage est alimenté, au moyen d'un courant ou d'une tension d'un miroir de courant d'un composant de commutation intégré ou d'un rapport cyclique ou d'une tension qui constitue la ou ladite une grandeur de régulation d'un convertisseur de tension qui convertit une tension de l'accumulateur en une tension avec laquelle le dispositif d'éclairage est alimenté.

8. Procédé selon la revendication 6 ou 7, dans lequel la surveillance consiste à : comparer le courant à un intervalle de courant normal qui représente une intensité de courant apparaissant de manière typique pendant un fonctionnement normal du dispositif d'éclairage, et dans lequel la comparaison est effectuée par le dispositif de contrôle d'éclairage de l'appareil de commande (10).

9. Procédé selon l'une quelconque des revendications 6-8, dans lequel des données d'indication qui concernent le système d'entraînement électrique sont en outre générées par l'appareil de commande (10), et dans lequel un signal d'alarme est en outre fourni lorsqu'un fonctionnement erroné est déterminé par ladite surveillance, dans lequel l'appareil de commande (10) délivre les données d'indication et le signal d'alarme sous la forme d'un signal d'indication commun.

10. Procédé selon l'une quelconque des revendications 6-9, dans lequel un feu arrière et un feu avant de la bicyclette électrique sont alimentés en tant que dispositif d'éclairage par l'appareil de commande (10), de préférence par un étage final commun du circuit d'éclairage (70).
